Europäisches Patentamt

European Patent Office

Office européen des brevets

(19)

(11) Publication number: **0 107 491**
A2

(12) **EUROPEAN PATENT APPLICATION**

(21) Application number: **83306400.9**

(22) Date of filing: **21.10.83**

(51) Int. Cl.³: **G 01 N 27/00**, G 01 N 17/00

(30) Priority: **22.10.82 US 436481**

(43) Date of publication of application: **02.05.84**
**Bulletin 84/18**

(84) Designated Contracting States: **AT BE CH DE FR GB IT LI NL SE**

(71) Applicant: **AMCHEM PRODUCTS, INC., Brookside Avenue, Ambler Pennsylvania 19002 (US)**

(72) Inventor: **Knaster, Mark, 301 Tyler Court, Ambler Pennsylvania, 19002 (US)**

(74) Representative: **Sanderson, Laurence Andrew et al, Sanderson & Co. 97 High Street, Colchester Essex C01 1TH (GB)**

(54) **Electrochemical method of testing for surface-characteristics, and testing apparatus for use in the method.**

(57) A method of electrochemically-testing a bare or chemically-treated metal or other electrically-conductive surface to determine its characteristics, by contacting the surface with a dilute electrolyte, measuring at least the steady-state potential of the surface and preferably also the direct current amperages obtained when respective small positive and negative voltage differentials (relative to the steady-state potential) typically ± 50 millivolts are applied to the electrolyte solution; and comparing and contrasting the measured results with those secured with a standard comparison surface.

This testing method is used to check the quality of the output of metal pretreatment processes and in methods of controlling their operation.

Testing apparatus used in these methods includes an open-ended electrochemical cell, containing a standard reference electrode and a counter-electrode, for positioning on the surface to be tested as well as circuitry and meters for reading the steady-state potential of the reference electrode and the currents flowing between the surface under test and the counter-electrode via electrolyte in the cell.

- 1 -

### Electrochemical Method of Testing for Surface-Characteristics, and Testing Apparatus for Use in the Method

This invention concerns an electrochemical method of testing electrically-conductive materials to determine their surface-characteristics, and testing apparatus for use in the method.

Methods for the electrochemical testing of some specific parameter of chemical-conversion coatings upon metal surfaces are not unknown. Thus an article by R. W. Zurilla et al. entitled "Quantitative Test for Zinc Phosphate Coating Quality", SAE Technical Paper No. 780187, Society of Automotive Engineers, Inc., Warrendale, Pennsylvania, United States of America (presented at SAE Congress and Exposition. Cobo Hall, Detroit during the period February 27 - March 3, 1978) discloses an electrochemical test for zinc phosphate coating porosity, which the authors found correlated well with salt spray performance; and a paper by M. Piens et al., entitled "Electrochemical Methods to Determine the Corrosion Rate of Coated Metals" published in the Proceedings of the International Congress of Metal Corrosion, 8th, 1981, page 1021, Volume 2, 47LJAF, discusses the advantages of impedance measurements over polarization resistance in gaining insight into the behaviour of the coating and the corrosion mechanism.

Nevertheless, so far as we are aware no effective electrochemical system has till now been developed for the determination of multiple parameters of chemical-conversion coatings, and consequently no electrochemical testing method is currently available for checking the effectiveness of metal-pretreatment operations and thus facilitating the control of the pretreatment chemical solutions used in such operations, despite the self-evident need for such a system in the metal-coating industry.

We however have now found an electrochemical method of testing electrically-conductive materials, above all the metals used in most industrial fabrication processes, so as to determine their surface characteristics - and thereby to secure data which can be used to control the composition of any chemical solution used in the pretreatment of such surfaces during industrial fabrication processes. The method can be used to determine the cleanliness of a bare, uncoated metal (or other electrically- -conductive) surface, upon which depends its ability to accept an effective chemical-conversion coating thereon; the method also can be used for determining a number of the characteristics of phosphate and other chemical-conversion coatings on metal surfaces, and thereby monitoring their quality; and the method is so sensitive that it can furthermore be used for the rapid determination of the potency of a metal-pretreatment solution, even to the extent of determining incipient subpotency well before any noticeable degradation of the phosphate coatings has occurred.

According to one aspect of this invention there is provided a method of electrochemically- -testing a chemically-treated or -untreated metal or other electrically-conductive surface so as to determine its surface-characteristics, in which a dilute electrolyte solution is placed in contact with said surface, and then one measures at least:

(A) the steady-state potential of the surface via a reference-electrode immersed in said electrolyte solution; and in which the result thus measured is compared and contrasted with that secured by a like determination performed upon a standard comparison surface of known characteristics.

As will appear hereinafter, such a measurement of the steady-state potential of the surface is itself enough to detect variations in the pH-value of chemical--treatment solutions previously employed upon the metal surface. Normally however one wishes to test the surface-characteristics of the metal or other electrically-conductive surface more extensively than that, and the method of the invention will therefore nearly always include the further steps of also measuring:

   (B) the direct current amperage obtained when a small positive or negative voltage differential (relative to the steady-state potential) is applied via a counter-electrode immersed in the electrolyte solution; and

   (C) the direct current amperage obtained when a small voltage differential (relative to the steady-state potential) opposite to that employed in step (B) is applied via said counter-electrode immersed in the electrolyte solution;

and in which all the measured results (A), (B) and (C) are compared and contrasted with those secured by a like determination performed upon a standard comparison surface of known characteristics.

The method of the invention has broad applications for testing the electrical surface-characteristics of any electrically-conductive surface which has been or will be treated with a chemical treatment solution. The method has however been developed especially for use in conjunction with the chemical pretreatment of metal surfaces - before, during or after chemical conversion-coating processes.

The method of the invention can be used to test the characteristics of any metal surface, either uncoated or bearing a chemical-conversion coating thereon. Thus for instance either bare, uncoated or conversion-coated ferriferrous, zinciferrous and aluminium surfaces can all be tested to determine the characteristics of their surfaces.

The electrolyte solution used in the method of the invention can be any dilute electrolyte provided only that it must of course be non-reactive with the uncoated or conversion-coated surface with which it is to be put in contact. One suitable and very convenient electrolyte is for example sodium chloride, which may satisfactorily be employed at a dilution in the range of from about 0.01 to about 0.001 grams/litre.

The pH of the electrolyte solution should be adjusted into the range needed for proper operation of the chosen reference electrode, in accordance with existing knowledge. Thus for example, when a calomel electrode is employed the pH of the solution should be adjusted into the range of from 10 to 12, using an aqueous inorganic alkaline solution such as a solution of sodium hydroxide; but when for example the reference electrode is a hydrogen electrode, the pH should be adjusted into the range of from 3 to 4, using an acid such as hydrochloric acid.

The steady-state potential of the metal surface is measured in step (A) by use of the reference electrode. The term "steady-state potential" is used herein to mean the potential of the system without the introduction of voltage or amperage from any external source outside the system.

- 5 -

The "small voltage differential" used in steps (B) and (C) will normally be a voltage differential of from about 20 millivolts to about 500 millivolts, as compared with the steady-state potential of the system; and can conveniently and preferably be a positive or negative voltage of about ± 50 millivolts, on either side of the steady-state potential. In step (B) the voltage differential is applied and recorded, and the resulting microamperage is equally recorded; and then in step (C) the voltage differential is reversed, and again the voltage differential and the microamperage obtained are read off and recorded.

The method of the invention can be employed in a metal-pretreatment process as an early-stage preliminary step, so as to determine the cleanliness of a bare, uncoated metal surface, and thus its suitability (or otherwise) for receiving a subsequently applied chemical-conversion coating thereupon. For that purpose the standard comparison surface used in the test method should be a similar metal surface which is known to be highly clean, as determined by electron microscope examination or other suitable procedure. If the readings of measurements (A), (B), and (C) on the surface under test are identical or very close to those secured with the clean control metal surface used as the standard comparison surface, it can be concluded that the metal surface being tested is also clean; but if the readings are significantly different from those obtained with the similar control surface (thus if for example the amperage readings from both a positive potential and a negative potential are significantly less than the readings obtained for the control) it can be concluded that the metal surface

- 6 -

is not clean, and thus may be unsuitable to accept an even phosphate or other chemical-conversion coating thereon.

The method of the invention can also be employed in a metal-pretreatment process as an intermediate-stage step, upon a metal surface already having a chemical-conversion coating thereon, so as thus to determine both the crystallinity and the coating thickness of the chemical-conversion coating.

In this intermediate-stage step, when the method is carried out on a metal surface that already bears a chemical-conversion coating thereon (such as for example a zinc phosphate coating) the measurement of the steady-state potential using a standard reference electrode in step (A) of the method is actually a measurement of the overall "corrosion potential" of the coated metal. This "corrosion potential" is believed to be a combination of three potentials, deriving respectively from the following reactions:

(a) oxygen reduction;

(b) hydrogen evolution; and

(c) metal dissolution

In this variant of the method the invention, the standard comparison surface used must be a similar metal surface known to have an effective chemical-conversion coating thereon. Such a standard comparison surface can be prepared for example by appying the chosen kind of chemical-conversion coating (e.g. a zinc phosphate coating) to clean metal using a freshly-formulated conversion-coating solution (e.g. a zinc phosphating solution) and further checking the adequacy of the resultant conversion coating by subjecting specimens to further processing

- 7 -

- thus applying a siccative coating thereto such as paint, and checking the quality of the painted surface by utilizing standard tests, such as those laid down for this purpose by the American Society for Testing Materials (ASTM).

At this point however it should be noted that it is not necessary to freshly prepare a standard comparison surface for each test; one can instead establish certain values or ranges of values for the (A), (B) and (C) readings which are typical of those secured with an effective chemical-conversion coating of the appropriate type on the metal-substrate in question, and then merely relate the measured values of the (A), (B) and (C) readings to those typical values.

In order to establish such typical values or ranges of values, one may prepare a series of standard comparison surfaces in the manner indicated above, and once satisfied that all of them represent high-quality chemical-conversion coatings they may be tested by the method of this invention to establish a common value, or more likely a range of values, for the measured readings (A), (B) and (C) which thereafter will serve as standard comparison values, for conversion-coatings of that type upon the chosen metal substrate, for high-quality conversion-coatings - and against which therefore the readings (A), (B) and (C) actually measured on similar metal surfaces coated with the same conversion-coating solution can be compared and contrasted as the coating solution continues to be used in commercial processing of metal surfaces.

Operating in this manner, for so long as the metal surfaces tested continue to give (A), (B) and (C) readings within the standard ranges of values thus determined for the high-quality conversion-coated metal surface(s), both the quality of the conversion-coating and the condition of the conversion-coating solution are known to be good. If however one or more of the measured readings (A), (B) and (C) should fall outside the corresponding standard range(s), then it can be deduced that the quality of the conversion-coating has deteriorated, and adjustment of the coating solution may be required.

Moreover, the measurements will not only indicate that something is wrong, but also help to diagnose the fault. The identity of the reading which has deviated from the standard, and the extent of the deviation, can usually be used to determine both the nature and the seriousness of the problem presented. Thus, when for example the measured steady-state potential falls outside the typical range, the problem lies either in the acidity of the coating solution or in the effectiveness of the final after-rinse used on the coated surface. When however it is the cathodical current (i.e. the current coming from the counter-electrode to the metal surface) which falls outside the typical range, then if this current is higher than the standard range this indicates either a higher level of porosity (i.e. a larger grain size in the conversion coating) or a lower conversion-coating weight, but if this current is lower than the standard range that indicates that a higher conversion-coating weight has been applied. And when it is the anodical current (i.e. the current coming from the metal surface to the counter-electrode) which is higher than the standard range, this indicates that the stability (i.e. passivity) of the metal surface is unsatisfactory, which in turn suggests either that probably there is not an adequate level of nitrite accelerator in the conversion-coating solution or that, possibly, there is a problem with the quality of the final after-rinse.

Supposing that all of the measurements (A), (B) and (C) fall outside the typical ranges, this is an indication either that the metal surface had not been adequately cleaned prior to application of the conversion-coating, or that several of the coating solution parameters are outside their proper ranges.

The testing method of the invention is so sensitive that it can actually be used to detect the onset of deterioration in the quality of the conversion coating at such an early stage that the coating is in fact still of a good, commercially-acceptable quality. Consequently, the testing method of this invention can be used as a quality-control system on commercial production lines, in order to check and control the composition of the coating or other treatment solution upon an ongoing basis, so that the composition of the solution will continually remain at or very near its maximum potency.

It is indeed a specific preferred feature of this invention to provide a method of controlling the composition of a chemical treatment solution used in processes for the chemical treatment of the surfaces of electrically-conductive materials, in which samples of the output of said process are intermittently or continuously subjected to the testing method of this invention to determine their surface characteristics, which are then compared and contrasted with those of a standard comparison surface, and any

0107491

- 10 -

significant deviation between the measured values and the standard values thus ascertained is used to determine the nature and amount of an adjustment in the composition of the chemical treatment solution designed to restore it to maximum potency.

The control method of this invention is of especial value in the operation of industrial metal-pretreatment processes, foremost amongst which are those wherein the electrically-conductive material is a metal, notably a ferriferrous and/or zinciferrous metal or aluminium alloy, and wherein the chemical treatment solution employed is a chemical-conversion coating solution notably one of the type which contains both zinc ions and phosphate ions, as well as other optional ingredients in accordance with existing knowledge.

The control method of the present invention can in principle be automated. It can be arranged that the samples of the output from the process are subjected to the testing method automatically, on the production line; and it can also be arranged that significant deviations between the values for the surface-characteristics measured on the tested samples and the standard values shall generate a signal or signals which will operate equipment controlling replenishment of the treatment solution, so that appropriate adjustments to the composition of that solution are made automatically.

The testing and control methods of this invention are also useful, both directly and indirectly, in relation to the so-called "after-rinse" solutions, in themselves well known, which are employed in the final rinsing down of conversion-coated metal surfaces. The testing and control methods can be directly

0107491

- 11 -

employed to evaluate the passivating effect and to control the potency of these after-rinse solutions, in a manner akin to that previously described herein as regards the evaluation and control of the conversion--coating solutions, and which therefore need not be further described.

The testing method is however also indirectly very useful, especially as regards after-rinse solutions, since it can also be used as a tool for the development of improved surface coatings. Thus, for example, the testing method of the invention is of great value in the rapid screening of after-rinse solutions when one is seeking replacements for present-day chemical rinses, such as those based upon tri- and/or hexavalent chromium. Currently the effectiveness of any alternative after-rinse solution can be evaluated only by applying a siccative paint coating to the thus-passivated conversion coating, and then carrying out prolonged corrosion tests on the painted surface to determine its corrosion resistance; but by using the testing method of the present invention it becomes possible to evaluate the quality and effectiveness of any newly-developed after--rinse solutions very quickly and easily, by measuring the anodic and cathodic currents and comparing their values (or average values) with those obtained with a known standard passivated conversion coating of acceptable quality.

It will be appreciated therefore that the testing method and the control method of this invention, by enabling one to test the surface-characteristics of chemically-treated electrically-conductive materials and from the results thus obtained to adjust the composition of the chemical treatment solutions employed, can be used to ensure that no conversion-coated metal should need to be

0107491

- 12 -

either re-processed or scrapped, with obvious industrial advantages.

According to another aspect of this invention there is also provided apparatus, suitable for use in the testing and control methods herein disclosed for measuring the surface-characteristics of electrically-conductive materials, said apparatus comprising:

- a cell body having an opening at one end and adapted for positioning in sealing engagement against the surface to be tested so that an electrolyte may be introduced into the cell body to contact the surface through said opening thereby to form therewith an electrochemical cell;

- a standard reference-electrode located within the cell body and so disposed therein as to be immersed in electrolyte introduced into the electrochemical cell, but out of contact with the surface to be tested;

- a counter-electrode also located within the cell body and so disposed therein as to be immersed in electrolyte introduced into the electrochemical cell, but out of contact with both the surface to be tested and the standard reference-electrode;

- voltage measuring means arranged to determine the potential difference between the standard reference-electrode and the surface to be tested;

- a power source arranged to impress a voltage across the counter-electrode and the surface to be tested;

- switching means adapted to permit selection of the polarity of the voltage impressed by the power source; and

- current measuring means arranged to determine

- 13 -

the current flowing through the counter-electrode.

The apparatus of the invention optionally but desirably includes a reservoir, adapted to contain a supply of the electrolyte to be used in the electrochemical cell, and means for introducing electrolyte from the reservoir into the cell. The voltage measuring means may be a millivoltmeter, the current-measuring means may be a microampmeter, and both these meters may conveniently be combined with the power source and the switching means in a single self-contained unit. The counter-electrode may be formed of a noble metal or graphite. The sealing engagement between the cell body and the surface to be tested can be provided by any suitable sealing means, such as a rubber ring, mounted upon the cell body around the opening in the end thereof and adapted to establish a liquid seal between the cell body and the surface to be tested when pressed firmly thereon.

- 14 -

In order that the invention may be well understood a preferred embodiment of the electrochemical testing apparatus -in accordance therewith will now be described in more detail, though only by way of illustration, with reference to the accompanying drawing, in which:

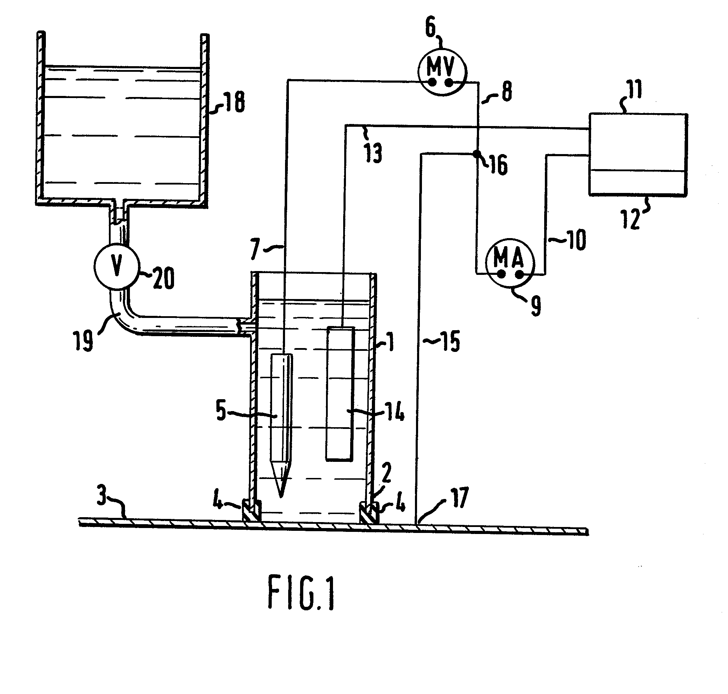

Figure 1 is a schematic, part cross-sectional view of a preferred embodiment of the electrochemical testing apparatus of this invention.

As shown in Figure 1, the testing apparatus comprises an electrochemical cell 1, placed with an open end 2 thereof against a metal surface 3 which is to be tested. A rubber ring 4 is mounted around the rim of open end 2, so as to provide a liquid seal between the cell 1 and an electrically-conductive surface 3. Within the electrochemical cell 1 there is a reference electrode 5, located therein so as to lie above surface 3 and out of contact with the walls of cell 1.

This reference electrode 5 is inter-connected with a millivoltmeter 6 via electrically-conductive lead 7; and the millivoltmeter 6 is inter-connected via electrically-conductive lead 8 with a microampmeter 9, which in turn is connected via electrically-conductive lead 10 with a direct-current power source 11, equipped with switching means 12. The power source 11 is also interconnected via electrically-conductive lead 13 to counter-electrode 14, which is located within electrochemical cell 1 so that it lies above surface 3 and out of contact with both the walls of the cell 1 and the reference electrode 5.

The switching means 12 is adapted to drive current in either direction through the circuit, i.e. to drive current flow through lead 10 when switching means 12 is in one operative position, but

- 15 -

to drive current flow through the other lead 13 when switching means 12 is turned to its other operative position.

The testing apparatus of the invention also includes an electrically-conductive lead 15, connected at one end 16 to lead 8, and provided at its other end 17 with means for establishing electrical contact with a portion of surface 3 outside of and remote from the walls of the electrochemical cell 1.

Optionally but desirably the testing apparatus also includes an electrolyte reservoir 18, which may be used to store electrolyte solution for use in the electrochemical cell 1. When present, the electrolyte reservoir 18 is connected through a tube or pipe 19 to the electrochemical cell 1; and the flow of electrolyte solution from the reservoir 18 through the pipe 19 into the electrochemical cell 1 is controlled by stopcock or valve 20.

The electrochemical cell 1 may be contructed .of any suitable electrically non-conductive material, but is preferably an open-ended cylindrical cell formed of glass or some kind of plastic material. The rubber ring 4 may be formed of any natural or synthetic "rubbery" elastomer which will be chemically- -inert to the electrolyte system, electrically non-conductive, and serve to establish a liquid seal when pressed firmly against surface 3 - but we recommend the use of neoprene.

The reference electrode 5 can be any standard reference electrode, such as a calomel electrode, a hydrogen electrode, a mercury oxide electrode or a silver oxide electrode, or indeed others. The counter- -electrode 14 can be formed of any electrically- -conductive chemically-inert material, for instance

- 16 -

graphite and the noble metals such as gold, silver or platinum.

The power source 11, the millivoltmeter 6 and the microampmeter 9 will preferably all be mounted in a single unit. Units of this kind, also containing switching means 12 are commercially available such as for example that sold in the United States of America under the tradename Power Supply, Hewlett--Packard 6216-A.

The electrically-conductive leads 7, 8, 10, 13 and 15 are all standard, commercially-available wire leads; and the means at end 17 of lead 15 for establishing electrical contact with the surface 3 may be any standard contact means, conveniently for instance one or more electrically-conductive clamps.

The testing apparatus of this invention is used to carry out the testing method as follows. The cell 1 is placed with its open end 2 against the surface 3, and then the chosen electrolyte is introduced into cell 1 until the electrolyte fully covers both the reference-electrode 5 and the counter--electrode 14. As previously indicated the electrolyte is most conveniently introduced into the electrochemical cell 1 from the electrolyte reservoir 18, by opening the stopcock or valve 20 so as to permit the desired amount of electrolyte to flow through pipe 19 into the electrochemical cell 1.

Then, as the first step in the testing method, without activating the power source 11 (i.e. with switching means 12 turned off) one measures the

- 17 -

steady-state potential of the metal surface through the dilute electrolyte solution within the electrochemical cell 1, by reading millivoltmeter 6.

After the steady-state potential has been thus read off, and recorded, then (unless no further measurements are required, as when checking no more than the pH of the coating solution used in the pretreatment of the surface, as already discussed) one applies first a small positive potential and then a small negative potential (or vice versa) as compared with the steady-state potential from the power source 11 to the reference-electrode 5 and the counter-electrode 14, via the circuitry as previously described, by moving the switching means 12 from one operative position to the other. During each of these respective "positive" and "negative" test stages, one reads the microampmeter 9, and records the results thus obtained.

- 18 -

In order that the method of this invention may be well understood it will now be described in more detail, but only by way of illustration, with reference to the following examples:

## EXAMPLE 1

This example shows that both cathodic and anodic current measured with the electrochemical testing apparatus of this invention increase in direct relationship to increasing grain size of a zinc-phosphate conversion coating on a metal-substrate.

A. Operation No. 1 - Cleaning

A low-carbon cold-rolled steel (ASTM 1010) panel (4" x 12", approx. 10.2 x 30.5 cm) was sprayed for 60 seconds at $130^{o}F$ (approx. $54^{o}C$) with a cleaning solution containing the following ingredients:

| Ingredients | grams/litre |
|---|---|
| Sodium tripolyphosphate | 2.2 |
| Sodium metasilicate | 0.8 |
| Sodium hydroxide (100%) | 4.1 |
| Surfactant (TRITON DF-16) | 1.0 |

Operation No. 2 - The cleaned panel was given a cold water rinse for 30 seconds.

Operation No. 3 - Substrate activation.

The panel was next sprayed for 30 seconds with a surface activating solution at $80^{o}F$ (approx. $27^{o}C$) containing the following ingredients:

- 19 -

| Ingredients | grams/litre |
|---|---|
| Potassium titanium fluoride | 0.06 |
| Disodium phosphate | 1.14 |

Operation No. 4 - Zinc phosphating

The panel was then sprayed in a zinc-
-phosphating solution for 60 seconds at $130^{\circ}F$
(approx. $54^{\circ}C$) with a nozzle-pressure of 10 psig.
(approx. $0.068$ N/mm$^2$). The zinc-phosphating solution
was composed of the following ingredients:

| Ingredients | grams/litre |
|---|---|
| Phosphoric acid (100%) ($H_3PO_4$) | 22.9 |
| Zinc ion | 0.9 |
| Nickel ion | 0.4 |
| Sodium hydroxide (100%) | 6.9 |
| Ferric chloride, hexahydrate | 0.03 |
| Sodium chlorate (technical grade) | 0.08 |
| Sodium nitrite | 0.15 |

Operation No. 5 - The panel was next given a
cold-water rinse for 30 seconds.

Operation No. 6 - The panel was then treated with an
acidulated (pH 3.7) aqueous chromate rinse solution for
10-15 seconds at ambient temperature. The acidulated aqueous
rinse contained the following quantities of chromium ion:

| Ingredients | grams/litre |
|---|---|
| $Cr^{6+}$ | 0.42 |
| $Cr^{3+}$ | 0.18 |

Operation No. 7 - The panel was treated with a
deionized water rinse for 2-5 seconds at ambient temperature. The conductivity of the deionized water was
less than $1.0 \times 10^{-6}$ mhos. The panel was dried by
blowing with air.

0107491

- 20 -

The grain size of the zinc phosphate conversion coating was obtained using a Leitz Wetzlar, SM-LUX HL microscope at magnifications of 500X and 1600X. A polaroid microphotograph (3" x 4", approx. 7.6 x 10.2 cm) was used for measurements of crystal size by a ruler. The size of a single crystal present in the coating is represented by an average value of 10 consecutive measurements from the photomicrograph.

The grain size of this coating was <2 microns.

B. The procedure given above in A. was repeated with a second low carbon cold-rolled steel (ASTM 1010) panel except that in Operation No. 3 the panel was sprayed with the surface activating solution for only 5 seconds.

The grain size of the resulting zinc phosphate conversion coating was between 4 and 6 microns.

C. The procedure given above in A. was repeated with a third low carbon cold-rolled steel (ASTM 1010) panel except that in Operation No. 3 the panel was sprayed with the surface activating solution for only 1 second.

The grain size of the resulting zinc phosphate conversion coating was between 7 and 11 microns.

D. The procedure given above in A. was repeated with a fourth low carbon cold-rolled steel (ASTM 1010) panel except that in Operation No. 3 the surface activating solution was diluted to 30% of the original concentration and the spray time was 10 seconds.

The grain size of the resulting zinc phosphate conversion coating was between 12 and 16 microns.

An electrochemical test was then performed at ambient temperature on a 1 $cm^2$ area of each of the above zinc phosphated panels using the electrochemical

testing apparatus of the invention.  The panels were contacted with the electrochemical cell 1 as shown in Figure 1 of the accompanying drawings.  Electrochemical cell 1 was filled with 0.01 molar NaCl solution until the reference electrode 5 and counter electrode 14 were well covered with the solution. The solution was then adjusted to pH 10 by the addition of NaOH.  Reference electrode 5 was a calomel reference electrode, and counter electrode 14 was a graphite electrode.  The testing apparatus was completed as shown in Figure 1 of the drawings, using a Hewlett-Packard 6216-A Power Supply (11).  The steady-state potential was measured for each panel. A voltage of +50 millivolts from the steady-state potential was applied by means of power source 11 and the resulting current (anodic current) measured.  Then a voltage of -50 millivolts from the steady-state potential was applied and the resulting current (cathodic current) measured.  The results obtained for the above four phosphated panels (A. to D.) are given in Table 1 below.

TABLE 1

| Panel No. | Grain Size (Microns) | Steady State Potential Volts | Cathodic current in µA at -50mV | Anodic current in µA at +50mV | Average Current, µA |
|-----------|------------------|---------------------------|-------------------------------|------------------------------|---------------------|
| A. | <2 | -0.372 | 1.7 | 4 | 2.85 |
| B. | 4-6 | -0.480 | 2.4 | 5.6 | 4 |
| C. | 7-11 | -0.487 | 3 | 8.6 | 5.8 |
| D. | 12.16 | -0.484 | 4.3 | 18.8 | 11.55 |

- 22 -

EXAMPLE 2

The procedure of Example 1 A was repeated with four additional low-carbon cold-rolled steel (ASTM 1010) panels, except that the free acid level in the zinc-phosphating solution in Operation No. 4 was changed as indicated in Table 2 below, by the addition of either phosphoric acid or sodium hydroxide.

It is known that the zinc-phosphating solution used in Operation No. 4 gives the best conversion coatings when the free acid test is in the range of 0.6 to 0.8 mL. The free acid test measures the number of millilitres of 0.1N NaOH solution needed to titrate 10.0 millilitres of the solution to a Bromphenol blue endpoint.

TABLE 2

| Panel No. | Free Acid Test mL (No. of mL to BPB endpoint – 10 mL bath sample) | Cathodic current in µA at –50 mV | Anodic current in µA at +50 mV | Average Current µA |
|---|---|---|---|---|
| 1 | 0.2 | 12 | 14 | 13 |
| 2 | 0.7 | 2 | 4.8 | 3.4 |
| 3 | 1.2 | 8 | 10 | 9 |
| 4 | 1.8 | 18 | 27 | 22.5 |

As can be seen from the above table the smallest average current is obtained when the free acid in the bath is at an optimum value of 0.7 mL, and the average current becomes significantly greater when the free acid is increased or decreased from the optimum value.

EXAMPLE 3

Four low-carbon cold-rolled steel (ASTM 1010) panels were treated in accordance with the following steps:

- 23 -

Operation No. 1 - Cleaning

The panels were sprayed with the same cleaning solution as was used in Operation No. 1 in Example 1A. above, by spraying the panels with the cleaning solution at 140°F (approx. 60°C) for 60 seconds.

Operation No. 2 - The cleaned panels were rinsed in cold water for 30 seconds.

Operation No. 3 - Iron Phosphating

The panels were sprayed with an aqueous iron-phosphating solution at 160°F (approx. 71°C) for varying periods shown below, at a nozzle pressure of 10 psig. (approx. 0.068 $N/mm^2$).

| Panel No. | Spray time, secs. |
|-----------|-------------------|
| 1 | 20 |
| 2 | 35 |
| 3 | 45 |
| 4 | 60 |

The aqueous iron-phosphating solution having a pH of about 5, had the following composition:

| Ingredients | grams/litre |
|-------------|-------------|
| Phosphoric acid (100%) | 8.32 |
| Sodium carbonate | 3.3 |
| Chromium nitrate (100%) | 0.014 |
| Sodium hydroxide (100%) | 0.66 |
| Sodium chlorate | 4.63 |

Operation No. 4 - The panels were then rinsed with cold water for 30 seconds.

Operation No. 5 - The panels were treated with an aqueous acidulated (pH = 3.7) chromate solution for 15 seconds at ambient temperature. The aqueous acidulated chromate solution contained the following quantities of chromate ions:

- 24 -

| Ingredients | grams/litre |
|---|---|
| $Cr^{6+}$ | 0.42 |
| $Cr^{3+}$ | 0.18 |

Operation No. 6 - The panels were rinsed with deionized water for 2 to 5 seconds at ambient temperature, and dried by blowing with air.

The panels were then tested with the electrochemical testing apparatus of this invention according to the procedure described in Example 1.

The coating weights of the panels were determined by weight difference after stripping the iron phosphate coatings from the panels using a 5% volume/volume aqueous solution of chromic acid for 5 minutes at 160°F (approx. 71°C). The panels were rinsed in cold water for 10 seconds and dried by blowing with air.

The results obtained are given in Table 3 below:

TABLE 3

| Panel No. | Coating Weight mg/ft$^2$  mg/m$^2$ | | Cathodic current in μA at -50 V* | Anodic current in μA at +50mV* | Average Current μA |
|---|---|---|---|---|---|
| 1 | 18 | 193.75 | 36 | 28 | 32 |
| 2 | 27 | 290.63 | 19 | 21 | 20 |
| 3 | 36 | 387.50 | 5 | 3.5 | 4.25 |
| 4 | 48 | 516.67 | 3.1 | 2.7 | 2.9 |

[* relative to the steady-state potential]

As can be seen from the above table, the average current is inversely proportional to the coating weight. Accordingly, when a desired coating weight is obtained for a given coating system, the testing apparatus of the invention can be utilized to determine undesirable variations in coating weight enabling appropriate adjustment in the spray time, the spray

- 25 -

temperature and/or the composition of the coating solution.

## EXAMPLE 4

This example shows the use of the testing apparatus and method of the invention for screening final-rinse solutions for their effectiveness in enhancing the corrosion-resistance of a chemical--conversion coating on a metal-substrate.

In this example standardized metal-substrate panels are coated with a standardized chemical--conversion coating, followed by treatment with the various final-rinse solutions which are to be tested. The panels are then tested by means of the testing apparatus and method of this invention; and after testing the panels are then coated with a standardized paint, and re-tested by conventional testing procedures for corrosion-resistance.

Twelve low-carbon cold-rolled steel (ASTM 1010) panels (4" x 12", approx. 10.2 x 30.5 cm) were treated according to the procedure of Example 1A, except that the rinse used in Operation No. 6 was varied from panel to panel. The aqueous rinse formulations used for each panel were those indicated in Table 4 below, which also shows the electrochemical results obtained using the testing apparatus and method described in Example 1.

After testing in this fashion the zinc-phosphated panels were painted, first by the cathodic electrodeposition of as base coat PPG 3002 and then with an acrylic enamel (DuPont 922), and the painted panels were then re-tested by conventional procedures.

TABLE 4

| Panel No. | Operation No. 6 Aqueous Rinse Formulation<br><br>Zinc phosphate conversion coating on steel CRS 1010 ASTM panels) | Paint: PPG(EC) 3002 and DuPont 922 topcoat | | | Salt Spray 1000 hrs |
|---|---|---|---|---|---|
| | | Electrochemical Test ($\pm$ 50 mV) | | | |
| | | $E_c$ | I-cathodic | I-anodic | |
| | | Volts | $\mu A$ | $\mu A$ | mm |
| 1 | Deionized water | -0.372 | 8 | 16 | 2.34 |
| 2 | 0.42 g/l $Cr^{6+}$ and<br>0.18 g/l $Cr^{3+}$ | -0.372 | 1.7 | 4 | Trace |
| 3 | 0.005% Phytic acid + 0.115% $H_2ZrF_6$ + $NH_4OH$ (pH = 4.45) | -0.433 | 3.5 | 15 | 1.56 |
| 4 | 0.115% $H_2ZrF_6$ (pH = 4.48) + $NH_4OH$ | -0.440 | 3.5 | 13 | 2.34 |
| 5 | 0.03% Phytic acid + 0.055% $H_2ZrF_6$ + $NH_4OH$ (pH = 4.43) | -0.436 | 25 | 27 | 12.5 |
| 6. | 0.115% $H_2ZrF_6$ + $NH_4OH$ heated to 130°F (pH = 4.6) (approx. 54°C) | -0.394 | 5.1 | 2.0 | Trace |

TABLE 4 (Continued)

| Panel No. | Operation No. 6 Aqueous Rinse Formulation (Zinc phosphate conversion coating on steel CRS 1010 ASTM panels) | Paint: PPG(EC) 3002 and DuPont 922 topcoat | | | Salt Spray 1000 hrs |
|---|---|---|---|---|---|
| | | Electrochemical Test($\pm$ 50 mV) | | | |
| | | $E_c$ | I-cathodic | I-anodic | |
| | | Volts | $\mu$A | $\mu$A | mm |
| 7 | 0.4% $H_2ZrF_6$ + $NH_4OH$ heated to $130^\circ F$ (pH = 4.6) (approx. $54^\circ C$) | -0.424 | 14 | 23 | 2.34 |
| 8 | 0.6% $(NH_4)_2ZrF_6$ + $Na_2HPO_4$ (pH = 4.3) | -0.536 | 4.3 | 8 | 0.78 |
| 9 | 0.5% $(NH_4)_2ZrF_6$ + $Na_2HPO_4$ (pH = 5) | -0.484 | 4.1 | 2 | 0.39 |
| 10 | 0.010% Phytic acid + 0.05% $NH_4F.HF$ + $NH_4OH$ (pH = 4.3) | -0.492 | 13 | 12 | 1.56 |
| 11 | 0.01% Phytic acid + 0.115% $H_2ZrF_6$ + $NH_4OH$ (pH = 4.45) | -0.424 | 13 | 10 | 1.17 |
| 12 | 0.01% Phytic acid + 0.4% $H_2ZrF_6$ + $NH_4OH$ (pH = 4.5) | -0.333 | 3 | 6 | Trace |

[Note: The salt spray test was carried out in accordance with ASTM B117]

- 28 -

As can be seen from Table 4 above, the results of the salt spray test correlate well, in a direct relationship with the cathodic and anodic current measurements.  In other words, generally-speaking the lower the cathodic and anodic currents, the less the paint-loss in salt spray corrosion failure.

Twenty low-carbon cold-rolled steel (ASTM 1010) panels were treated according to the process of Example 3, using a 60 second spray time in Operation No. 3, except that a different aqueous treatment solution is used in Operation No. 5 for each panel.

The electrochemical testing apparatus and method described in Example 1 was used on each panel, and the results thus obtained are set out in Table 5 below.

The iron-phosphated panels thus tested were then painted with an acrylic single-coat spray paint system, and afterwards re-tested by conventional procedures.  The results of salt spray testing in accordance with ASTM B117 are also given in Table 5, where salt spray corrosion failures are rated in millimetres (mm) of corrosion creepage from the scribe.  The percentages of ingredients in the aqueous rinse formulations given in Table 5 are expressed in percent by weight.

TABLE 5

| Panel No. | Operation No. 5 Aqueous Rinse Formulation, pH = 4.3 to 5.0 (iron phosphate conversion coating on steel CRS 1010 ASTM panels) | Paint System: Single Coat Acrylic Paint | | | | Salt Spray Test ASTM B117 250 hrs Failure mm average |
|---|---|---|---|---|---|---|
| | | Electrochemical Test at $\pm$ mV | | | | |
| | | SS,volts | Icathod.,$\mu a$ | Ianod.,$\mu a$ | Iavg.,$\mu a$ | |
| 1 | Deionized water | -0.396 | 3.60 | 28.0 | 32.0 | 3.8 |
| 2 | 0.42 g/l $Cr^{6+}$ and 0.18 g/l $Cr^{3+}$ | -0.440 | 3.1 | 2.7 | 2.9 | Trace |
| 3 | 0.005% Phytic acid + 0.0092% $H_2ZrF_6$ | -0.744 | 11.0 | 10.0 | 10.5 | 0.8 |
| 4 | 0.005% Phytic acid + 0.1% $H_2ZrF_6$ | -0.722 | 4.9 | 4.4 | 4.6 | Trace |
| 5 | 0.0023% $H_2ZrF_6$ | -0.400 | 21.0 | 28.0 | 24.5 | 3.5 |
| 6 | 0.0055% $H_2ZrF_6$ | -0.660 | 13.0 | 15.0 | 14.0 | 1.0 |
| 7 | 0.052% $H_2ZrF_6$ | -0.720 | 9.0 | 8.0 | 8.5 | 0.6 |
| 8 | 0.1% $H_2ZrF_6$ | -0.664 | 6.4 | 3.0 | 4.8 | Trace |
| 9 | 0.03% Phytic acid + 0.0133% $H_2ZrF_6$ | -0.628 | 24.0 | 21.0 | 22.5 | 3.0 |
| 10 | 0.03% Phytic acid + 0.055% $H_2ZrF_6$ | -0.690 | 16.0 | 16.0 | 16.0 | 1.8 |

TABLE 5 (Continued)

| Panel No. | Operation No. 5 Aqueous Rinse Formulation, pH = 4.3 to 5.0 (iron phosphate conversion coating on steel CRS 1010 ASTM panels) | Paint System: Single Coat Acrylic Paint | | | | |
| | | Electrochemical Test at $\pm$ mV | | | | Salt Spray Test ASTM B117 250 hrs Failure mm average |
| | | ss,volts | Icathod.,$\mu$a | Ianod.,$\mu$a | Iavg.,$\mu$a | |
| 11 | 0.03% Phytic acid + 0.115% $H_2ZrF_6$ | -0.704 | 19.0 | 11.0 | 15.0 | 1.8 |
| 12 | 0.115% $H_2ZrF_6$ + 0.5% $NH_4HF_2$ | -0.704 | 19.0 | 18.0 | 18.5 | 2.5 |
| 13 | 0.5% $(NH_4)_2ZrF_6$ + $Na_2HPO_4$ | -0.740 | 10.0 | 23.0 | 16.5 | 2.8 |
| 14 | 0.6% $(NH_4)_2ZrF_6$ + $Na_2HPO_4$ | -0.646 | 8.0 | 14.0 | 11.0 | 1.0 |
| 15 | 0.1% $(NH_4)_2 ZrF_6$ + $K_3PO_4$ | -0.734 | 14.0 | 15.0 | 14.5 | Trace |

Continued:

TABLE 5 (Continued)

| Panel No. | Operation No. 5 Aqueous Rinse Formulation, pH = 4.3 to 5.0 (iron phosphate conversion coating on steel CRS 1010 ASTM panels) | Paint System: Single Coat Acrylic Paint | | | | |
|---|---|---|---|---|---|---|
| | | Electrochemical Test at ± mV | | | | Salt Spray Test ASTM B117 250 hrs Failure mm average |
| | | ss,volts | Icathod.,μa | Ianod.,μa | Iavg.,μa | |
| 16 | 0.25% $H_2ZrF_6$ + $Na_2HPO_4$ | −0.580 | 9.5 | 8.8 | 9.1 | 0.8 |
| 17 | 0.1% $H_2ZrF_6$ + $Na_2HPO_4$ | −0.656 | 16.3 | 17.0 | 16.6 | 1.8 |
| 18 | 0.4% $H_2ZrF_6$ | −0.710 | 7.1 | 8.8 | 80. | Trace |
| 19 | 0.1% $H_2ZrF_6$ + $K_3PO_4$ | −0.664 | 9.1 | 8.8 | 9.0 | 0.8 |
| 20 | 0.4% $H_2ZrF_6$ at 130°F (approx.54°C) | −0.678 | 10 | 11 | 10.5 | 1.0 |

- 31 -

0107491

- 32 -

All of the procedures and results summarized in Tables 4 and 5 above demonstrate a correlation between the salt-spray test results and the currents passing from the counter-electrode to the phosphated metal surface. As can be seen from those results, when this current is larger than that for the chromic acid base rinse (Panel No. 2), a higher level of salt-spray test failure usually resulted. It will thus be appreciated that, by taking quick electrochemical measurements it becomes possible easily to determine the corrosion stability of chemical-conversion coatings when treated with different final rinses.

## EXAMPLE 5

Eight low-carbon cold-rolled steel (ASTM 1010) panels (4" x 12", approx. 10.2 x 30.5 cm) were treated in accordance with the process of Example 3, using a spray time of 60 seconds in Operation No. 3, except that the pH of the iron-phosphating solution used in Operation No. 3 was varied for each panel by adding phosphoric acid or sodium hydroxide to the coating solution.

The conversion-coated panels were then tested with the electrochemical testing apparatus of this invention using the procedure described in Example 1 to determine the steady-state potential of each panel. The steady-state potentials thus determined are set out in Table 6 below, together with the pH of the iron-phosphating solution employed.

TABLE 6

| Panel No. | pH of Phosphating Bath (iron phosphating coating over steel CRS 1010) | Steady State Potential, Volts |
|---|---|---|
| 1 | 2.10 | -0.488 |
| 2 | 2.50 | -0.460 |
| 3 | 3.20 | -0.420 |
| 4 | 4.15 | -0.386 |
| 5 | 4.95 | -0.322 |
| 6 | 5.6 | -0.286 |
| 7 | 6.15 | -0.258 |
| 8 | 6.85 | -0.206 |

As can be seen from Table 6 above, increasing the pH of the iron-phosphating solution results in a shift of the steady-state potential to the positive side. Since the optimum operating pH for this solution is known to be about 4.95, the steady-state potential can be used to control the pH of the solution during commercial use, i.e. when the steady-state potential varies from the value of $E_{ss} = -0.322$ (at pH 4.95), adjustment of the pH of the bath is indicated, with the direction of the shift in potential showing whether the pH is too acid or too alkaline.

- 34 -

C L A I M S

1.      A method of electrochemically-testing a chemically-treated or -untreated metal or other electrically-conductive surface so as to determine its surface-characteristics, in which a dilute electrolyte solution is placed in contact with said surface, and then one measures at least:

(A) the steady-state potential of the surface via a reference-electrode immersed in said electrolyte solution;

and in which the result thus measured is compared and contrasted with that secured by a like determination performed upon a standard comparison surface of known characteristics.

2.      A testing method as claimed in claim 1, which includes the further steps of also measuring:

(B) the direct current amperage obtained when a small positive or negative voltage differential (relative to the steady-state potential) is applied via a counter-electrode immersed in the electrolyte solution; and

(C) the direct current amperage obtained when a small voltage differential (relative to the steady-state potential) opposite to that employed in step (B) is applied via said counter-electrode immersed in the electrolyte solution;

and in which all the measured results (A), (B) and (C) are compared and contrasted with those secured by a like determination performed upon a standard comparison surface of known characteristics.

- 35 -

3. A testing method as claimed in claim 2, in which the small voltage differential used in steps (B) and (C) is in the range of from 20 millivolts to 500 millivolts, and preferably is about ± 50 millivolts.

4. In a metal-pretreatment process in which a clean, bare, uncoated metal surface is subjected to a chemical-conversion coating procedure, the step of subjecting the bare, uncoated metal surface to the testing method claim in any of claims 1 to 3 so as thus to determine its cleanliness characteristic.

5. In a metal-pretreatment process in which a metal surface is subjected to a chemical-conversion coating procedure, the step of subjecting the conversion-coated metal surface to the testing method claimed in any of claims 1 to 3 so as thus to determine the crystallinity and/or coating thickness of the chemical-conversion coating formed upon the metal surface.

6. In a metal-pretreatment process in which a conversion-coated metal surface is subjected to a final passivating after-rinse, the step of subjecting the thus-passivated conversion-coated metal surface to the testing method claimed in any of claims 1 to 3 so as thus to determine the degree of passivation achieved.

7. A method of controlling the composition of a chemical treatment solution used in processes for the chemical treatment of the surfaces of electrically--conductive materials, in which samples of the output of said process are intermittently or continuously subjected to the testing method claimed in any of claims 1 to 3 so as to determine their surface characteristics, which are then compared and contrasted with those of a standard comparison surface, and any significant deviation between the measured values and the standard values thus ascertained is used to determine the nature and amount of an adjustment in the composition of the chemical treatment solution designed to restore it to maximum potency.

8.    A control method as claimed in claim 7, in which the elctrically-conductive material is a metal, and the chemical-treatment solution is a conversion-coating solution.

9.    A control method as claimed in claim 8, in which the metal is a ferriferrous and/or zinciferrous metal or an aluminium alloy, and the conversion-coating solution is of the type which contains both zinc and phosphate ions.

10.    A control method as claimed in any of claims 7 to 9, in which samples of the output from the process are automatically subjected to the testing method on the production lines and any significant deviations between the values for the surface--characteristics thus measured on the tested samples and the standard values of the comparison surface generate  a signal or signals which are arranged to operate equipment controlling replenishment of the treatment solution, so that appropriate adjustments to the composition of that solution are automatically made thereby.

11.    Apparatus, suitable for use in the testing and control methods claimed in any of claims 1 to 10 for measuring the characteristics of the surfaces of electrically-conductive materials, said apparatus comprising:

    - a cell body having an opening at one end and adapted for positioning in sealing engagement against the surface to be tested so that an

- 37 -

electrolyte may be introduced into the cell body to contact the surface through said opening thereby to form therewith an electrochemical cell;

- a standard reference-electrode located within the cell body and so disposed therein as to be immersed in electrolyte introduced into the electrochemical cell, but out of contact with the surface to be tested;

- a counter-electrode also located within the cell body and so disposed therein as to be immersed in electrolyte introduced into the electrochemical cell, but out of contact with both the surface to be tested and the standard reference-electrode;

- voltage measuring means arranged to determine the steady-state potential difference between the standard reference-electrode and the surface to be tested;

- a power source arranged to impress a voltage across the counter-electrode and the surface to be tested;

- switching means adapted to permit selection of the polarity of the voltage impressed by the power source; and

- current measuring means arranged to determine the current flowing through the counter-electrode.

12. Apparatus as claimed in claim 11, which also includes a reservoir, adapted to contain a supply of electrolyte to be used in the electrochemical cell, and means for introducing such electrolyte from the reservoir into the cell.

FIG.1